# EUROPEAN PATENT SPECIFICATION

(11) **EP 3 418 087 B1**
(45) Date of publication and mention of the grant of the patent: **04.03.2020**
(21) Application number: 18154490.9
(22) Date of filing: 31.01.2018
(51) Int. Cl.: B60H 1/00, B60H 1/32, B60L 8/00

(54) **AN AGRICULTURAL VEHICLE HAVING IMPROVED ENERGY EFFICIENCY**
LANDWIRTSCHAFTLICHES FAHRZEUG MIT VERBESSERTER ENERGIEEFFIZIENZ
VÉHICULE AGRICOLE POSSÉDANT UN RENDEMENT ÉNERGÉTIQUE AMÉLIORÉ

(30) Priority: 03.02.2017 EP 17290010
(43) Date of publication of application: 26.12.2018
(73) Proprietor: AGCO International GmbH, 8212 Neuhausen am Rheinfall (CH)
(72) Inventor: DJIDJAN, Koffi, 60026 Beauvais (FR)
(74) Representative: AGCO Intellectual Property Department

(56) References cited:
- US-A1- 2005 066 679
- US-A1- 2009 019 861
- US-A1- 2009 286 459

## Description

### Field of the Invention

The present invention relates to an agricultural vehicle having improved energy efficiency, in particular an agricultural tractor.

Document US 2005/0066679 A1 describes a cooling system for an agricultural tractor, comprising a primary air conditioning loop coupled to a secondary coolant loop for cooling the operator's cabin.

### Background of the Invention

The continued drive towards environmentally-friendly vehicles prompts vehicle manufacturers to develop products with reduced emissions levels, and greater energy efficiency. Such focus can prove challenging in the area of agricultural vehicles, due to the increase power levels required for the operation of such relatively large machines and associated implements, as well as the operation of various vehicle systems provided for operator comfort and entertainment, e.g. air conditioning systems, in-cab audio-visual systems, satellite navigation devices, etc.

As a result, it is an object of the invention to provide an agricultural vehicle having improved energy efficiency.

### Summary of the Invention

Accordingly, there is provided an agricultural vehicle, preferably a tractor, having a vehicle cab, wherein the vehicle comprises:
(i) a primary air conditioning loop, comprising:
   a compressor to compress a refrigerant from a low pressure to a high pressure,
   a condenser to condense the refrigerant coming from the compressor,
   an expansion valve to expand the refrigerant coming from the condenser from high pressure to low pressure, and
   an evaporator receiving the low pressure refrigerant to provide cold air to the vehicle cab;
   and
(ii) a secondary cooling circuit, the secondary cooling circuit configured to cool a portion of the primary air conditioning loop, the secondary cooling circuit comprising:
   a fluid tank for storage of a cooling fluid, and
   a cooling element arranged to cool fluid stored in the fluid tank,
   wherein the cooling element comprises a thermoelectric cooling element.

Through the use of a secondary cooling circuit, it is possible to reduce the energy requirements of the primary air conditioning loop.

In a particularly preferred embodiment of the invention, the thermoelectric cooling element is driven by a renewable energy power source.

The use of a renewable energy power source to power the cooling feature of the secondary cooling circuit can result in a reduction in the overall emission levels of the vehicle.

Preferably, the vehicle comprises a renewable energy power source.

Preferably, the renewable energy power source comprises at least one solar panel.

As agricultural vehicles such as tractors spend the majority of operational time in open spaces such as fields, accordingly they are generally exposed to relatively high levels of direct sunlight. When solar radiation levels are relatively high, this can result in relatively large solar heating of the vehicle cab, which subsequently leads to increased cooling requirements of the vehicle air conditioning system. By utilising solar power to drive the secondary cooling circuit, accordingly the additional efficiency effect of the secondary cooling circuit is maximised for those occasions when power demands are generally increased.

Preferably, the at least one solar panel is provided on the roof of the vehicle cab.

The roof of the cab provides the best location for a solar panel, as it is less likely to be shaded by use of attachments such as front loaders or hitch-mounted implements, or by the movement of the vehicle about a field.

Additionally or alternatively, the renewable energy power source comprises a vehicle-mounted wind turbine.

The vehicle may be provided with more than one type of renewable power generation device, to increase the reliability of power generation for all climate possibilities. Preferably, the vehicle comprises a power storage system, wherein the power storage system can be selectively coupled with the renewable energy power source, to store power generated by the renewable energy power source for later use in the vehicle.

By providing a power storage system such as a solar battery, power generated by the renewable energy power source can be stored in times of excess for later use.

Preferably, the vehicle comprises a power controller coupled with the renewable energy power source, the power controller configured to selectively supply power from the renewable energy power source to a plurality of vehicle subsystems. It will be understood that the secondary cooling circuit may be arranged as one of such vehicle subsystems.

Based on the instantaneous energy requirements of the vehicle, the power generated from the renewable energy power source may be routed to other vehicle components to provide for the most efficient operation of the vehicle.

Preferably, the plurality of vehicle subsystems comprises at least one of the following: a vehicle external light system; a vehicle internal light system; a vehicle audio-visual system; a vehicle radio system; a vehicle power outlet; a vehicle cool box or refrigeration device.

It will further be understood that the power controller is configured to supply power from the renewable energy power source for storage in a power storage system, the power controller further configured to receive power stored in the power storage system
Preferably, the vehicle comprises a status indicator arranged to display to an operator of the vehicle status information relating to the renewable energy power source.

Such a status indicator may be provided as a stand-alone display, or may be integrated into a display terminal provided in the cab for use by the vehicle operator. The display of information relating to the renewable energy power source and the use of power generated by the source provides feedback to the operator on the effectiveness of the use of the renewable energy, and may prompt the operator to operate the vehicle in a more efficient manner.

The status information may comprise one or more of the following: the current power level supplied from the renewable energy power source; the average power level supplied from the renewable energy power source; the vehicle subsystem currently powered by the renewable energy power source.

Preferably, the secondary cooling circuit comprises a heat sink arranged within the fluid tank, and a Peltier cell driven by the renewable energy power source, the Peltier cell conductively coupled with the heat sink to cool fluid contained in the fluid tank.

Preferably, the secondary cooling circuit comprises a fluid conduit arranged to route cooled fluid from the fluid tank into thermal contact with a portion of the primary air conditioning loop.

The cooled fluid is brought into thermal contact with the primary air conditioning loop between the condenser and the evaporator of the primary air conditioning loop, in order to improve the air conditioning sub cooling temperature.

Preferably, a portion of the fluid conduit is arranged as a concentric outer tube about a portion of the primary air conditioning loop. The fluid conduit can be arranged as a concentric heat exchanger positioned around a length of the tubing or piping used in the primary air conditioning loop to route the refrigerant, preferably located in the junction between the condenser and the evaporator, in particular between the condenser and the expansion valve of the air conditioning loop.

Preferably, the secondary cooling circuit comprises a motor and valve, or a pump, to drive cooled fluid from the fluid tank about the fluid conduit of the secondary cooling circuit.

Preferably, the vehicle comprises a drain to collect condensate from the evaporator of the primary air conditioning circuit, wherein said drain supplies said condensate to the fluid tank of the secondary cooling circuit.

By using the condensate from the evaporator in the secondary cooling circuit, the efficiency of the overall system is improved.

In an alternative embodiment of the invention, the thermoelectric cooling element is driven by an energy recovery system, preferably a thermoelectric power generator. Preferably, the vehicle is provided with such an energy recovery system.

An energy recovery system may be used as an alternative to the renewable energy power source as described above. In a further embodiment of the invention, the vehicle may comprise both a renewable energy power source and an energy recovery system as described above, which may be both used to drive the thermoelectric cooling element.

Preferably, the energy recovery system comprises a thermoelectric module provided on an exhaust line of the vehicle.

Due to the relatively high temperature difference between the exhaust gas line of a vehicle and the ambient temperature, a thermoelectric module (for example of the Seebeck effect type) can aid in the generation of additional power for use in the vehicle.

Preferably, the fluid tank or reservoir for storage of the cooling fluid comprises an insulated tank. The use of such an insulated tank helps to maintain the fluid at a relatively low temperature.

### Detailed Description of the Invention

Embodiments of the invention will now be described, by way of example only, with reference to the accompanying drawings, in which:
Fig. 1 is a side view of an agricultural tractor according to an embodiment of the invention;
Fig. 2 is an illustration of the primary air conditioning loop and the secondary cooling loop of the tractor of Fig. 1.

The drawings are provided by way of reference only, and will be acknowledged as not to scale.

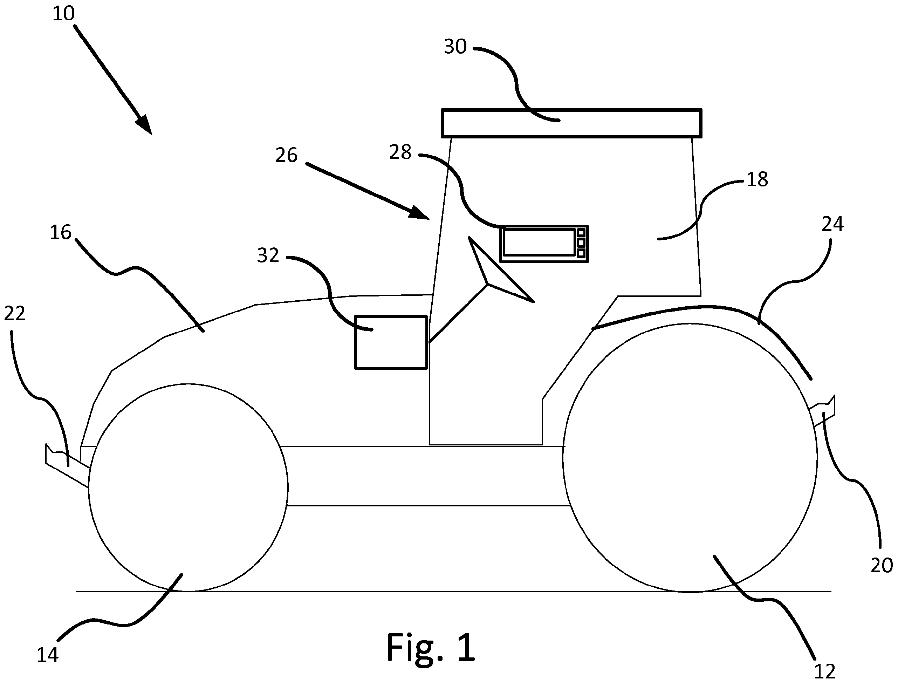

With reference to Fig. 1, a vehicle according to the invention in the form of an agricultural tractor is indicated at 10. The tractor 10 comprises rear wheels 12 and front wheels 14, a forward engine compartment 16 and a cab section 18. A rear linkage 20 is provided at the rear of the tractor 10, and a front linkage 22 is provided at the front of the tractor 10. Rear wheel fenders 24 are provided to cover a portion of the rear wheels 12.

The cab section 18 is provided with a roof box 30. Within the cab 18, an operator station 26 is provided, where the operator can access a display terminal and associated operator controls 28, as well as a steering wheel or other associated steering controls. The tractor 10 is provided with at least one electronic control unit (ECU) 32, which is configured to interface with the operator controls 28, the steering controls 29 and with the various systems and sensors provided about the tractor 10, to provide for monitoring and control of tractor operation. The controls 28 and ECU 32 allow the operator to actuate different elements of the tractor 10, e.g. hydraulic circuits, lifting systems, HVAC operation, and/or to control the acceleration and steering of the tractor 10.

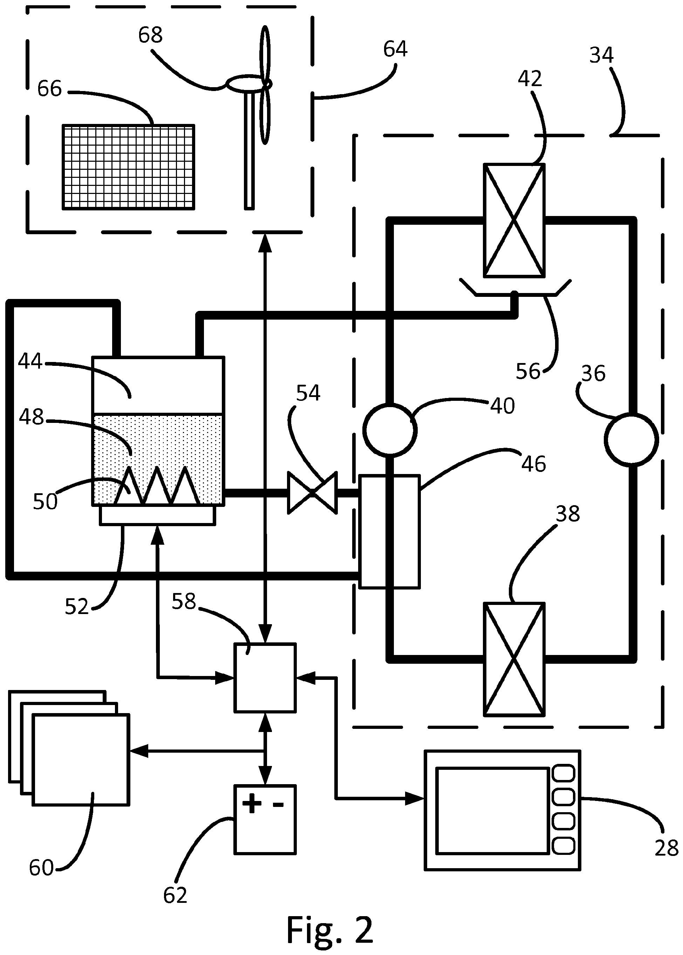

An overview of a selection of tractor systems is provided in Fig. 2. The tractor 10 comprises a primary air conditioning loop indicated by outline 34. The air conditioning loop 34 comprises a compressor 36 to compress a refrigerant from a low pressure to a high pressure, a condenser 38 to condense the refrigerant coming from the compressor 36, an expansion valve 40 to expand the refrigerant from the condenser 38 from high pressure to low pressure, and an evaporator 42 receiving the low pressure refrigerant from the expansion valve 40 to provide cold air to the vehicle cab 18. It will be understood that the air conditioning loop 34 further comprises appropriate tubing or ducting to route a refrigerant between the different components. The components of the air conditioning loop 34 may be distributed about the tractor 10 as appropriate, for example, the condenser 38 may be located within the engine compartment 16 of the tractor 10, while the evaporator 42 is provided as part of a vehicle HVAC unit, which may be located within the roof box 30 or at or in the cab section 18.

The tractor 10 is further provided with an additional or secondary cooling circuit, which is used to improve the efficiency of the primary air conditioning loop 34. The secondary cooling circuit comprises a fluid tank or reservoir 44 which is connected in a loop with a heat exchanger 46. The fluid tank or reservoir is preferably provided as an insulated container. The heat exchanger 46 is arranged to cool a portion of the primary air conditioning loop 34, for example using a concentric tube heat exchanger arranged around a portion of the tubing or ducting of the air conditioning loop 34. In the embodiment of Fig. 2, the heat exchanger 46 is located on the primary air conditioning loop 34 between the condenser 38 and the expansion valve 40, but it will be understood that the heat exchanger 46 may be located at different positions of the air conditioning loop 34 as appropriate.

A fluid 48 is provided in the secondary cooling circuit, where the fluid 48 is cooled when in the storage tank 44 using a cooling element. In the embodiment of Fig. 3, such a cooling element is provided using a heat sink 50 located in the tank 44, the heat sink 50 cooled using a thermoelectric cooling element 52 such as a Peltier cell. The fluid 48 is preferably water, but any suitable cooling fluid may be used in the secondary cooling circuit.

It will be understood that the secondary cooling circuit further comprises appropriate tubing or ducting to route the fluid 48 between the different components. The fluid 48 is driven about the secondary cooling circuit using a suitable pump or motor 54 and valve combination. In addition, in the embodiment of Fig. 2, the evaporator 42 of the primary air conditioning circuit 34 is provided with a drain 56 to collect condensate which forms on the evaporator 42. The collected condensate may then be provided to the storage tank 44 to supplement the contained fluid 48.

By providing a secondary cooling circuit to increase the cooling of a portion of the air conditioning loop 34, this can provide for more efficient operation of the air conditioning system of the tractor 10, as the energy required by the air conditioning loop 34 to reach the target cooling levels is reduced.

The thermoelectric cooling element 52 is powered by electric power sent via a power controller 58. The power controller 58 is configured to control the distribution of power about the tractor 10, between different component systems of the tractor 10. It will be understood that the power controller 58 may be provided in communication with the electronic control unit (ECU) 32 of the tractor 10, or may be provided as a module of the electronic control unit (ECU) 32 itself.

The power controller 58 is configured to monitor the status of, and provide power to, the thermoelectric cell 52 of the secondary cooling circuit as well as different vehicle components or vehicle subsystems, indicated at 60. The different vehicle subsystems 60 may comprise any combination of the following: a vehicle external light system; a vehicle internal light system; a vehicle audio-visual system; a vehicle radio system; a vehicle power outlet; a vehicle cool box or refrigeration device.

The power controller 58 is coupled with a power storage device such as a battery 62. In addition, the power controller 58 is coupled with a renewable energy power source, indicated at outline 64. Accordingly, the power controller 58 is configured to route power from the power storage device 62 and the renewable energy power source 64 for delivery to the thermoelectric cell 52 and/or any combination of the vehicle subsystems 60. In addition, in time of excess power generation by the renewable energy power source 64, the power controller 58 may be configured to store such excess power in the power storage device 62 for later use in the tractor 10.

It will be understood that the renewable energy power source 64 can comprise any suitable renewable power generator, or any combination of such generators. In the embodiment of Fig 2, the renewable energy power source 64 comprises a solar panel 66 and/or a vehicle-mounted wind turbine 68. The renewable energy power source 64 is preferably positioned at a location on the tractor 10 having the highest probability of uninterrupted power generation, for example on top of the roof box 30 of the vehicle cab section 18.

As a way of providing feedback to an operator of the tractor 10, the power controller 58 is coupled with the operator controls 28. The operator controls 28 can be configured to display a status indicator to an operator, to provide status information relating to the renewable energy power source 64. For example, the status indicator may display one or more of the following: the current power level supplied from the renewable energy power source 64; the average power level supplied from the renewable energy power source 64; the vehicle subsystem 60 currently powered by the renewable energy power source 64; the total power generated by the renewable energy power source 64; the power savings produced by use of the renewable energy power source 64 (e.g. the savings in fuel or battery charge); etc. By providing such information to the operator, the operator can easily see the effectiveness of the use of renewable energy, and may prompt the operator to operate the tractor 10 in a more efficient manner. In addition, the operator controls 28 may allow the operator to control the distribution of power through the power controller 58. For example, the operator may be able to select which subsystem or component is provided with power from the renewable energy power source 64, whether battery power is to be used, etc.

The use of a renewable energy power source 64 to provide supplemental power to the tractor 10 provides a more environmentally-friendly vehicle, having generally reduced emissions levels. In addition, where the renewable energy power source 64 is a solar panel 66, the power generation levels of the power source 64 are maximised during periods of relatively high sunlight, which generally corresponds with periods of high solar load on the cab section 18 of the tractor 10. As a consequence, the secondary cooling circuit can operate at maximum cooling effect for time periods where there are increased energy demands from the vehicle HVAC unit, and consequently the primary air conditioning loop 34. This allows for reduced overall energy requirements for the tractor 10, resulting in more energy-efficient operation.

In a further aspect of the invention, the thermoelectric cooling element may be driven by an energy recovery system (not shown). The energy recovery system may be provided as an alternative to, or as a supplemental power generation system for, the renewable energy power source 64. The energy recovery system is preferably provided as a thermoelectric power generator. Such a thermoelectric power generator module can be provided on an exhaust gas line of the vehicle. Due to the relatively high temperature difference between a vehicle exhaust line and the ambient temperature, a thermoelectric module (for example of the Seebeck effect type) can aid in the generation of additional power for use in the vehicle. It will be understood that the description provided above in respect of the embodiment having a renewable energy power source 64 may equally apply to a system having such an energy recovery system.

The invention is not limited to the embodiments described herein, and may be modified or adapted without departing from the scope of the present invention as defined by the appended claims.

## Claims

1. An agricultural vehicle, preferably a tractor, (10) having a vehicle cab, wherein the vehicle comprises:
(i) a primary air conditioning loop, (34) comprising:
a compressor (36) to compress a refrigerant from a low pressure to a high pressure,
a condenser (38) to condense the refrigerant coming from the compressor,
an expansion valve (40) to expand the refrigerant coming from the condenser from high
pressure to low pressure, and
an evaporator (42) receiving the low pressure refrigerant to provide cold air to the vehicle cab;
and
(ii) a secondary cooling circuit, **characterized in that**:
the secondary cooling circuit configured to cool a portion of the primary air conditioning loop, the secondary cooling circuit comprising:
a fluid tank (44) for storage of a cooling fluid, and
a cooling element arranged to cool fluid stored in the fluid tank;
wherein the cooling element comprises a thermoelectric cooling element (52)

2. The agricultural vehicle of claim 1, wherein the vehicle comprises a renewable energy power source (64), wherein the thermoelectric cooling element is driven by the renewable energy power source.

3. The agricultural vehicle of claim 2, wherein the renewable energy power source comprises at least one solar panel (66).

4. The agricultural vehicle of claim 3, wherein the at least one solar panel is provided on the roof (30) of the vehicle cab.

5. The agricultural vehicle of any one of claims 2-4, wherein the renewable energy power source comprises a vehicle-mounted wind turbine (68).

6. The agricultural vehicle of any one of claims 1-5, wherein the vehicle comprises a power storage system, wherein the power storage system (62) can be selectively coupled with the renewable energy power source, to store power generated by the renewable energy power source for later use in the vehicle.

7. The agricultural vehicle of any one of claims 1-6, wherein the vehicle comprises a power controller (58) coupled with the renewable energy power source, the power controller configured to selectively supply power from the renewable energy power source to a plurality of vehicle subsystems (60).

8. The agricultural vehicle of claim 7, wherein the plurality of vehicle subsystems comprises at least one of the following: a vehicle external light system; a vehicle internal light system; a vehicle audio-visual system; a vehicle radio system; a vehicle power outlet.

9. The agricultural vehicle of claim 7 or claim 8, wherein the power controller is configured to supply power from the renewable energy power source for storage in a power storage system, the power controller further configured to receive power stored in the power storage system (62).

10. The agricultural vehicle of any one of claims 1-9, wherein the vehicle comprises a status indicator arranged to display to an operator of the vehicle status information relating to the renewable energy power source.

11. The agricultural vehicle of claim 10, wherein the status information comprises one or more of the following: a current power level supplied from the renewable energy power source; an average power level supplied from the renewable energy power source; a vehicle subsystem currently powered by the renewable energy power source.

12. The agricultural vehicle of any one of claims 1-11, wherein the secondary cooling circuit comprises a heat sink (50) arranged within the fluid tank, and a Peltier (52) driven by the renewable energy power source, the Peltier cell conductively coupled with the heat sink to cool fluid contained in the fluid tank.

13. The agricultural vehicle of any one of claims 1-12, wherein the secondary cooling circuit comprises a fluid conduit arranged to route cooled fluid from the fluid tank into thermal contact with a portion of the primary air conditioning loop.

14. The agricultural vehicle of any one of claims 1-13, wherein the vehicle comprises a drain (56) to collect condensate from the evaporator of the primary air conditioning circuit, wherein said drain supplies said condensate to the fluid tank (44) of the secondary cooling circuit.

15. The agricultural vehicle of any one of claims 1-14, wherein the vehicle comprises an energy recovery system, wherein the thermoelectric cooling element is driven by the energy recovery system.

## Patentansprüche

1. Landwirtschaftliches Fahrzeug, vorzugsweise ein Traktor (10), mit einer Fahrzeugkabine, wobei das Fahrzeug das Folgende aufweist:
(i) einen primären Klimaanlagenkreis (34), mit:
einem Kompressor (36) zum Komprimieren eines Kühlmittels von einem niedrigen Druck auf einen hohen Druck,
einem Kondensator (38) zum Kondensieren des von dem Kompressor kommenden Kühlmittels,
einem Expansionsventil (40) zum Expandieren des von dem Kondensator kommenden Kühlmittels von dem hohen Druck auf den niedrigen Druck, und
einem Verdampfer (42), der das Kühlmittel niedrigen Drucks empfängt, um der Fahrzeugkabine kühle Luft bereitzustellen; und
(ii) einen sekundären Kühlkreis, **dadurch gekennzeichnet, dass**
der sekundäre Kühlkreis zum Kühlen eines Teils des primären Klimaanlagenkreises konfiguriert ist, wobei der zweite Kühlkreis das Folgende aufweist:
einen Fluidtank (40) zum Speichern eines Kühlfluids, und
ein Kühlelement, das zum Kühlen von in dem Fluidtank gespeicherten Kühlfluids angeordnet ist;
wobei das Kühlelement ein thermoelektrisches Kühlelement (52) aufweist.

2. Landwirtschaftliches Fahrzeug nach Anspruch 1, wobei das Fahrzeug eine Quelle für erneuerbare Energie (64) aufweist, wobei das thermoelektrische Kühlelement durch die Quelle für erneuerbare Energie angetrieben ist.

3. Landwirtschaftliches Fahrzeug nach Anspruch 2, wobei die Quelle für erneuerbare Energie mindestens ein Solarpaneel (66) aufweist.

4. Landwirtschaftliches Fahrzeug nach Anspruch 3, wobei das mindestens eine Solarpaneel auf dem Dach (30) der Fahrzeugkabine angeordnet ist.

5. Landwirtschaftliches Fahrzeug nach mindestens einem der Ansprüche 2-4, wobei die Quelle für erneuerbare Energie eine an dem Fahrzeug montierte Windkraftanlage (68) aufweist.

6. Landwirtschaftliches Fahrzeug nach mindestens einem der Ansprüche 1-5, wobei das Fahrzeug ein Energiespeichersystem aufweist, wobei das Energiespeichersystem (62) wahlweise mit der Quelle erneuerbare Energie gekoppelt werden kann, um die durch die Quelle erneuerbare Energie erzeugte Energie für eine spätere Verwendung in dem Fahrzeug zu speichern.

7. Landwirtschaftliches Fahrzeug nach mindestens einem der Ansprüche 1-6, wobei das Fahrzeug einen Energieregler (58) aufweist, der mit der Quelle für erneuerbare Energie gekoppelt ist, wobei der Energieregler zum wahlweisen Bereitstellen von Energie von der Quelle erneuerbarer Energie an eine Mehrzahl von Fahrzeug-Untersystemen (60) konfiguriert ist.

8. Landwirtschaftliches Fahrzeug nach Anspruch 7, wobei die Mehrzahl von Fahrzeug-Untersystemen mindestens eins der folgenden Dinge aufweist: ein externes Fahrzeuglichtsystem; ein internes Fahrzeuglichtsystem; ein audiovisuelles Fahrzeugsystem; ein Fahrzeug-Radiosystem; eine Fahrzeugsteckdose.

9. Landwirtschaftliches Fahrzeug nach Anspruch 7 oder 8, wobei der Energieregler zum Bereitstellen von Energie von der Quelle erneuerbarer Energie an einen Speicher in einem Energiespeichersystem konfiguriert ist, wobei der Energieregler weiterhin zum Empfangen von in dem Energiespeichersystem (62) gespeicherter Energie konfiguriert ist.

10. Landwirtschaftliches Fahrzeug nach mindestens einem der Ansprüche 1-9, wobei das Fahrzeug einen Statusanzeiger aufweist, der zum Anzeigen von Fahrzeugstatusinformationen betreffend die Quelle für erneuerbare Energie für einen Bediener angeordnet ist.

11. Landwirtschaftliches Fahrzeug nach Anspruch 10, wobei die Statusinformationen eines oder mehrere der folgenden Dinge aufweist: ein gegenwärtiges Energieniveau, das durch die Quelle für erneuerbare Energie bereitgestellt wird; ein durchschnittliches Energieniveau, das durch die Quelle für erneuerbare Energie bereitgestellt wird; ein Fahrzeug-Untersystem, das gegenwärtig durch die Quelle für erneuerbare Energie versorgt wird.

12. Landwirtschaftliches Fahrzeug nach mindestens einem der Ansprüche 1-11, wobei der sekundäre Kühlkreis einen in dem Fluidtank angeordneten Kühlkörper (50) und einen von der Quelle für erneuerbare Energie versorgten Peltier (52) aufweist, wobei die Peltier-Zelle mit dem Kühlkörper leitend verbunden ist, um in dem Fluidtank enthaltenes Kühlfluid zu kühlen.

13. Landwirtschaftliches Fahrzeug nach mindestens einem der Ansprüche 1-12, wobei der sekundäre Kühlkreislauf eine Fluidleitung aufweist, die zum Führen von Fluid aus dem Fluidtank in thermischem Kontakt mit einem Teil des primären Klimaanlagenkreises angeordnet ist.

14. Landwirtschaftliches Fahrzeug nach mindestens einem der Ansprüche 1-13, wobei das Fahrzeug einen Ablauf (56) zum Sammeln von Kondensat von dem Verdampfer des primären Klimaanlagenkreises aufweist, wobei der Ablauf den Fluidtank (44) des sekundären Kühlkreises mit Kondensat versorgt.

15. Landwirtschaftliches Fahrzeug nach mindestens einem der Ansprüche 1-14, wobei das Fahrzeug ein Energierückgewinnungssystem aufweist, wobei das thermoelektrische Kühlelement durch das Energierückgewinnungssystem versorgt wird.

## Revendications

1. Véhicule agricole, de préférence, un tracteur, (10) comportant une cabine de véhicule, dans lequel le véhicule comprend :
(i) une boucle de climatisation primaire (34) comprenant :
un compresseur (36) destiné à compresser un réfrigérant d'une basse pression à une haute pression,
un condenseur (38) destiné à condenser le réfrigérant provenant du compresseur,
une détendeur (40) destiné à détendre le réfrigérant provenant du condenseur d'une haute pression à une basse pression et un évaporateur (42) recevant le réfrigérant à basse pression afin de délivrer de l'air frais à la cabine de véhicule ; et
(ii) un circuit de refroidissement secondaire, **caractérisé en ce que** :
le circuit de refroidissement secondaire est configuré de manière à refroidir une partie de la boucle primaire de climatisation, le circuit de refroidissement secondaire comprenant :
un réservoir de fluide (44) afin d'assurer le stockage d'un fluide de refroidissement, et
un élément de refroidissement agencé afin de refroidir le fluide stocké dans le réservoir de fluide ;
dans lequel l'élément de refroidissement comprend un élément de refroidissement thermoélectrique (52).

2. Véhicule agricole selon la revendication 1, dans lequel le véhicule comprend une source d'alimentation en énergie renouvelable (64),
dans lequel l'élément de refroidissement thermoélectrique est alimenté par la source d'alimentation en énergie renouvelable.

3. Véhicule agricole selon la revendication 2, dans lequel la source d'alimentation en énergie renouvelable comprend au moins un panneau solaire (66).

4. Véhicule agricole selon la revendication 3, dans lequel le au moins un panneau solaire est agencé sur le toit (30) de la cabine de véhicule.

5. Véhicule agricole selon l'une quelconque des revendications 2 à 4, dans lequel la source d'alimentation en énergie renouvelable comprend une éolienne (68) montée sur le véhicule.

6. Véhicule agricole selon l'une quelconque des revendications 1 à 5, dans lequel le véhicule comprend un dispositif de stockage d'énergie, dans lequel le dispositif de stockage d'énergie (62) peut être couplé de manière sélective à la source d'alimentation en énergie renouvelable, afin de stocker l'énergie produite par la source d'alimentation en énergie renouvelable en vue d'une utilisation ultérieure sur le véhicule.

7. Véhicule agricole selon l'une quelconque des revendications 1 à 6, dans lequel le véhicule comprend un contrôleur d'énergie (58) couplé à la source d'alimentation en énergie renouvelable, le contrôleur d'énergie étant configuré afin de délivrer de manière sélective de l'énergie à partir de la source d'alimentation en énergie renouvelable à une pluralité de sous-ensembles de véhicule (60).

8. Véhicule agricole selon la revendication 7, dans lequel la pluralité de sous-ensembles de véhicule comprend au moins l'un des composants suivants : un dispositif d'éclairage externe de véhicule ; un dispositif d'éclairage interne de véhicule ; un dispositif audiovisuel de véhicule ; un dispositif de radio de véhicule ; une prise de courant de véhicule.

9. Véhicule agricole selon la revendication 7 ou 8, dans lequel le contrôleur d'énergie est configuré de manière à délivrer de l'énergie à partir de la source d'alimentation en énergie renouvelable afin d'assurer le stockage dans un dispositif de stockage d'énergie, le contrôleur d'énergie est, en outre, configuré de manière à recevoir de l'énergie stockée dans le dispositif de stockage d'énergie (62).

10. Véhicule agricole selon l'une quelconque des revendications 1 à 9, dans lequel le véhicule comprend un indicateur d'état agencé afin d'afficher à un opérateur du véhicule des informations d'état se rapportant à la source d'alimentation en énergie renouvelable.

11. Véhicule agricole selon la revendication 10, dans lequel les informations d'état comprennent une ou plusieurs des suivantes : un niveau courant d'énergie délivré à partir de la source d'alimentation en énergie renouvelable ; un niveau moyen d'énergie délivré à partir de la source d'alimentation en énergie renouvelable ; un sous-ensemble de véhicule couramment alimenté par la source d'alimentation en énergie renouvelable.

12. Véhicule agricole selon l'une quelconque des revendications 1 à 11, dans lequel le circuit de refroidissement secondaire comprend un radiateur (50) agencé à l'intérieur du réservoir de fluide, et une cellule de Peltier (52) alimentée par la source d'alimentation en énergie renouvelable, la cellule de Peltier étant couplée thermiquement au radiateur afin de refroidir le fluide contenu dans le réservoir de fluide.

13. Véhicule agricole selon l'une quelconque des revendications 1 à 12, dans lequel le circuit de refroidissement secondaire comprend un conduit de fluide agencé afin d'acheminer le fluide refroidi du réservoir de fluide en contact thermique avec une partie de la boucle de climatisation primaire.

14. Véhicule agricole selon l'une quelconque des revendications 1 à 13, dans lequel le véhicule comprend un drain (56) destiné à collecter le condensât à partir de l'évaporateur du circuit de climatisation primaire,
dans lequel ledit drain délivre ledit condensât au réservoir de fluide (44) du circuit de refroidissement secondaire.

15. Véhicule agricole selon l'une quelconque des revendications 1 à 14, dans lequel le véhicule comprend un dispositif de sauvegarde d'alimentation en énergie, dans lequel l'élément de refroidissement thermoélectrique est alimente par le dispositif de sauvegarde d'alimentation en énergie.
